# EUROPÄISCHE PATENTSCHRIFT

(11) **EP 3 248 696 B1**
(45) Veröffentlichungstag und Bekanntmachung des Hinweises auf die Patenterteilung: **07.06.2023**
(21) Anmeldenummer: 17171860.4
(22) Anmeldetag: 19.05.2017
(51) Int. Cl.: B08B 1/00, B08B 1/04, H02S 40/10, F24S 40/20, E04G 23/00

(54) **VORRICHTUNG ZUM REINIGEN VON FLÄCHEN**
SURFACE CLEANING DEVICE
DISPOSITIF DE NETTOYAGE DE SURFACES

(30) Priorität: 23.05.2016 DE 102016109402
(43) Veröffentlichungstag der Anmeldung: 29.11.2017
(73) Patentinhaber: Jäger, Anton, 89250 Senden (DE)
(72) Erfinder: Jäger, Anton, 89250 Senden (DE)
(74) Vertreter: Manitz Finsterwald Patent- und Rechtsanwaltspartnerschaft mbB

(56) Entgegenhaltungen:
- EP-A1- 1 840 073
- DE-A1- 19 715 563
- DE-U1-202010 010 541
- FR-A1- 3 010 644
- US-A1- 2013 305 474

## Beschreibung

Die vorliegende Erfindung betrifft eine Vorrichtung zum Reinigen von Flächen, insbesondere an Solar- oder Photovoltaikanlagen, gemäß dem Oberbegriff des Anspruchs 1 und des Anspruchs 2.

Die Reinigung großer Flächen ist in vielen Fällen eine aufwendige und daher kostspielige Angelegenheit. Insbesondere der Reinigung von Solar- und Photovoltaikanlagen kommt in der Praxis allerdings eine große Bedeutung zu. Eine Verschmutzung von deren Oberfläche wirkt sich nämlich unmittelbar nachteilig auf die Effizienz der Anlage aus.

Reinigungsvorrichtungen der hier in Rede stehenden Art sind z.B. bekannt aus DE 202010015730U, DE 102012002046A, DE 102010033800A, CH 706552A, DE 102010006531A, CN 101554892B, WO 2011/148004A, DE 10317479A, DE 202010010541U, DE 202010013883U, EP 2437001A, DE 19653697C, NL 1040526C, JP 62117653A, US 2013/305474A1, FR 3010644A1, DE 19715563A1 und EP 1840073A1. Das Dokument DE 202010010541 U offenbart eine Vorrichtung gemäß dem Oberbegriff der Ansprüche 1 und 2.

Bei der Reinigung solcher Anlagen kommt es nicht nur auf eine gute Reinigungswirkung an, sondern vor allem auch darauf, dass die Anschaffung und der Betrieb einer geeigneten Reinigungsvorrichtung möglichst kostengünstig sind, damit insgesamt ein möglichst wirtschaftlicher Betrieb der Solar- und der Photovoltaikanlage erreicht werden kann.

Eine Aufgabe der vorliegenden Erfindung ist es daher, eine Vorrichtung der eingangs genannten Art zu schaffen, die ein möglichst effizientes Reinigen der zu reinigenden Fläche ermöglicht.

Die Lösung dieser Aufgabe erfolgt durch eine Vorrichtung mit den Merkmalen des Anspruchs 1 und durch eine Vorrichtung mit den Merkmalen des Anspruchs 2. Erfindungsgemäß umfasst die Reinigungsvorrichtung wenigstens einen Reinigungskopf, der zumindest ein Reinigungsorgan aufweist. Das Reinigungsorgan umfasst beispielsweise zumindest eine in Rotation versetzbare Bürste. Ferner ist eine Bewegungseinrichtung zur Bewegung des Reinigungskopfs über zumindest einen Teil der zu reinigenden Fläche vorgesehen. Die Bewegungseinrichtung weist eine erste, in eine erste Richtung bewegbare Bewegungseinheit und eine zweite Bewegungseinheit auf. Der Reinigungskopf ist mittels der zweiten Bewegungseinheit entlang eines Führungsmittels, das mit der ersten Bewegungseinheit verbunden ist, quer oder schräg zu der ersten Bewegungsrichtung bewegbar. Außerdem ist ein an der ersten und/oder zweiten Bewegungseinheit angeordnetes Steuerungsmittel vorgesehen, mit dem die erste Bewegungseinheit in Abhängigkeit einer Position der zweiten Bewegungseinheit automatisch bewegbar ist.

Mit anderen Worten ist die Vorrichtung derart ausgestaltet, dass bei einem Erreichen einer bestimmten Position der zweiten Bewegungseinheit automatisch eine Bewegung der ersten Bewegungseinheit erfolgt, ohne dass Bedienungspersonal eingreifen muss. Das Steuerungsmittel sorgt ohne einen Eingriff von außen allein dadurch für eine Bewegung der ersten Bewegungseinheit, dass ein Erreichen einer vorbestimmten Position der zweiten Bewegungseinheit erkannt wird, beispielsweise wenn sich diese der ersten Bewegungseinheit annähert oder sie kontaktiert. Da die beiden Bewegungseinheiten unterschiedliche Bewegungsrichtungen aufweisen, kann der Reinigungskopf schrittweise über die zu reinigende Fläche geführt werden.

Gemäß der vorliegenden Erfindung nach Anspruch 1 weist das Steuerungsmittel einen Annäherungs- und/oder Kontaktschalter oder einen entsprechenden Sensor auf, der bei einer Annäherung und/oder einem Kontakt der Bewegungseinheiten einen Antrieb der ersten Bewegungseinheit bewirkt. Das Steuerungsmittel kann grundsätzlich ein einfacher Schalter sein. Ein entsprechender Schalter oder Sensor kann auch berührungslos funktionieren. Letztlich dient der Schalter oder Sensor dazu, eine Position der zweiten Bewegungseinheit zu erfassen. Ein entsprechendes Signal wird dann durch das Steuerungsmittel in einen Antrieb der ersten Bewegungseinheit umgesetzt. Beispielsweise ist das Steuerungsmittel ein elektrischer Kontakt, der bei einer Annäherung der beiden Bewegungseinheiten hergestellt wird, wodurch ein Stromkreis zum Antrieb der ersten Bewegungseinheit geschlossen wird.

Gemäß der vorliegenden Erfindung nach Anspruch 2 umfasst das Steuerungsmittel eine an der zweiten Bewegungseinheit vorgesehene mechanische Antriebseinrichtung, mit der die erste Bewegungseinheit bei einem Kontakt der Bewegungseinheiten zu einer Bewegung antreibbar ist. Beispielsweise ist die Antriebseinrichtung antriebswirksam mit einem Antrieb der zweiten Bewegungseinheiten gekoppelt. In diesem Fall wird die erste Bewegungseinheit letztlich durch den Antrieb der zweiten Bewegungseinheit zu einer Bewegung in die erste Bewegungsrichtung angetrieben. Ein separater Antrieb für die erste Bewegungseinheit ist dann nicht unbedingt erforderlich.

Weitere Ausführungsformen der Erfindung sind in den Ansprüchen, der Beschreibung und den beigefügten Zeichnungen angegeben.

Insbesondere umfasst die Antriebseinrichtung ein Zahnrad, das bei einem Kontakt der Bewegungseinheiten in Eingriff mit einem Antriebselement, insbesondere mit einem Zahnrad eines Antriebs der ersten Bewegungseinheit ist.

Gemäß einer vorteilhaften Ausführungsform umfasst das Steuerungsmittel ein Steuermittel, mit dem ein Antrieb der ersten Bewegungseinheit zeitverzögert und/oder nach dem Zurücklegen einer vorbestimmten Strecke unterbrechbar ist.

D.h. die Bewegung der ersten Antriebseinheit wird begrenzt, um der zweiten Bewegungseinheit erneut die Gelegenheit zu geben, sich entlang des Führungsmittels zu bewegen und dadurch die zu reinigende Fläche schrittweise abzudecken. Das Steuermittel kann z.B. ein Sensor oder Schalter oder eine elektronische Zeit- oder Streckenerfassungseinrichtung sein.

Das Steuerungsmittel kann auch derart ausgestaltet sein, dass eine Umkehr des Antriebs der zweiten Bewegungseinheit zeitverzögert und/oder nach dem Zurücklegen einer vorbestimmten Strecke der ersten Bewegungseinheit bewirkbar ist. Diese Ausführungsform ist insbesondere dann vorteilhaft, wenn das Steuerungsmittel die vorstehend beschriebene Antriebseinrichtung umfasst. Durch eine Umkehr des Antriebs der zweiten Bewegungseinheit kann bewirkt werden, dass sich die zweite Bewegungseinheit wieder von der ersten Antriebseinheit weg bewegt, um noch nicht gereinigte Flächenabschnitte zu reinigen. Mit anderen Worten wird die zweite Bewegungseinheit dadurch wieder aus der die automatische Bewegung der ersten Bewegungseinheit bewirkenden Position bewegt.

In einer praktisch besonders vorteilhaften Ausführungsform ist der Reinigungskopf an der zweiten Bewegungseinheit angeordnet. Ein mit dem Führungsmittel zusammenwirkendes Element der zweiten Bewegungseinheit kann relativ zu einer den Reinigungskopf tragenden Basis der zweiten Bewegungseinheit verschwenkbar sein, um auch in den verschiedenen Betriebszuständen der Vorrichtung stets eine bevorzugte Stellung des Reinigungskopfs beibehalten zu können.

Ein Verschwenkbarkeit ist möglich, aber nicht zwingend erforderlich, wenn gemäß einer Ausführungsform der Erfindung der Reinigungskopf bzw. die den Reinigungskopf tragende Basis derart ausgebildet ist, dass der Reinigungskopf in jeder oder zumindest in mehreren unterschiedlichen Stellungen jeweils eine bestimmungsgemäße Reinigung durchführen kann. Insbesondere kann der Reinigungskopf eine ovale oder kreisförmige Grundfläche aufweisen und/oder mit einem derart gestalteten Reinigungsorgan versehen sein, z.B. mit einer so genannten Tellerwaschbürste, die um eine senkrecht zur zu reinigenden Fläche verlaufende Achse in Rotation versetzbar ist.

Die erste und/oder die zweite Bewegungseinheit können elektrisch, hydraulisch und/oder pneumatisch angetrieben sein. Gleiches gilt für das Reinigungsorgan. Es versteht sich, dass die verschiedenen Antriebsarten miteinander kombinierbar sind. Vorteilhaft ist es beispielsweise in vielen Fällen, wenn die zweite Bewegungseinheit und das Reinigungsorgan hydraulisch beweg- oder antreibbar sind. Durch geeignete Ventilanordnungen können die Antriebe des Reinigungsorgans und der zweiten Bewegungseinheit bedarfsgerecht und - falls gewünscht - unabhängig voneinander betrieben werden. Bei einer Verwendung von Wasser als hydraulisches Antriebsmittel kann dieses auch gleichzeitig zur Reinigung der Fläche genutzt werden. Bei einem elektrischen Antrieb der ersten und/oder der zweiten Bewegungseinheit und/oder des Reinigungsorgans ist das Vorsehen eines Energiespeichers und/oder einer Photovoltaikeinheit vorteilhaft. Zumindest ein Teil des für den Betrieb der Vorrichtung erforderlichen Stroms kann somit durch die Vorrichtung selbst bereitgestellt werden.

Das Führungsmittel kann relativ zu der ersten Bewegungseinheit verschwenkbar sein. Insbesondere ist ein Winkel zwischen dem in der Regel geradlinigen Führungsmittel und der Bewegungsrichtung der ersten Bewegungseinheit (erste Richtung) in Abhängigkeit von dem Betriebszustand der Vorrichtung variabel. Ein passives Einstellen eines geeigneten Winkels ist dabei bevorzugt. Insbesondere ist der Winkel automatisch durch eine Bewegung der ersten Bewegungseinheit variierbar.

Das Führungsmittel kann längenveränderlich sein, um dem jeweiligen Betriebszustand der Vorrichtung Rechnung zu tragen.

Bei vielen Anwendungen ist es vorteilhaft, wenn das Führungsmittel ein Seil oder ein Band ist. Es ist aber auch durchaus denkbar, eine - gegebenenfalls teleskopierbare - Stange oder ähnliches zu verwenden, d.h. ein zumindest relativ starres Führungsmittel, das sowohl auf Zug als auch auf Schub belastet werden kann

Gemäß einer weiteren vorteilhaften Ausführungsform ist eine dritte Bewegungseinheit vorgesehen, die in einer dritten Richtung, die insbesondere parallel zu der ersten Richtung verläuft, bewegbar ist. Auch die dritte Bewegungseinheit ist mit dem Führungsmittel verbunden. Ein weiteres, an der dritten und/oder der zweiten Bewegungseinheit angeordnetes Steuerungsmittel ermöglicht es, die dritte Bewegungseinheit in Abhängigkeit einer Position der zweiten Bewegungseinheit automatisch zu bewegen. Insbesondere ist die dritte Bewegungseinheit analog zu der ersten Bewegungseinheit ausgebildet.

Bei einer räumlichen Beabstandung der ersten und dritten Bewegungseinheit kann die zweite Bewegungseinheit entlang des Führungsmittels hin und her bewegbar sein, wobei sie jeweils in bestimmten Positionen, insbesondere bei einer Annäherung und/oder bei einem Kontakt mit der ersten oder der dritten Bewegungseinheit, für ein Verfahren der ersten bzw. dritten Bewegungseinheit sorgt. Dadurch kann die zu reinigende Fläche auf effiziente Weise schrittweise überdeckt werden.

Die Erfindung betrifft ferner ein System mit einer Solar- oder Photovoltaikanlage und mit einer Vorrichtung gemäß zumindest einer der vorstehend beschriebenen Ausführungsformen.

Gemäß einer konstruktiv einfachen Ausführungsform des Systems sind die erste und/oder - falls vorhanden - die dritte Bewegungseinheit entlang eines, insbesondere äußeren, Rahmens der zu reinigenden Fläche geführt. Der Rahmen kann auch selbst als Führung für die erste und/oder dritte Bewegungseinheit dienen. Bei einer entsprechend angepassten Bauweise des Rahmens und der mit ihm zusammenwirkenden Bewegungseinheit(en) kann die Vorrichtung bei Bedarf auf einfache Weise installiert bzw. deinstalliert werden, ohne dass kostentreibende separate Führungseinrichtungen montiert werden müssen.

Bevorzugt ist der Rahmen eine äußere Umrahmung, eine äußere Begrenzung und/oder eine äußere Einfassung der jeweils zu reinigenden Fläche. Insbesondere handelt es sich bei dem Rahmen um einen Bestandteil der Solar- oder Photovoltaikanlage. Hierdurch kann ein ohnehin vorhandener Bestandteil der Anlage für die Reinigungsvorrichtung bzw. deren Bewegungseinheit(en) genutzt werden, so dass es nicht erforderlich ist, für die Reinigung vorübergehend wie auch immer geartete Halterungen oder Führungen für die Bewegungseinheit(en) zu verlegen.

Die vorliegende Erfindung wird nachfolgend anhand einer vorteilhaften Ausführungsform beispielhaft unter Bezugnahme auf die beigefügten Zeichnungen beschrieben. Es zeigen:
- Fig. 1: eine Ausführungsform einer erfindungsgemäßen Reinigungsvorrichtung in einer schematischen Darstellung und
- Fig. 2: die Vorrichtung der Fig. 1 in verschiedenen Betriebszuständen.

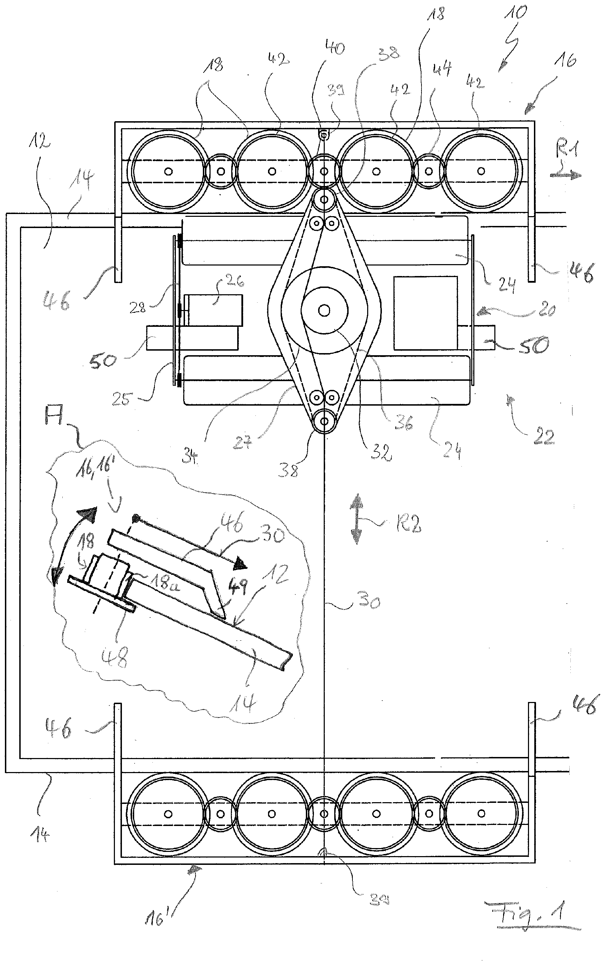

Fig. 1 zeigt schematisch eine erfindungsgemäße Reinigungsvorrichtung 10 an einer zu reinigenden Fläche 12, die beispielsweise zu einer Solar- oder Photovoltaikanlage gehört.

Die Fläche 12 ist von einem Rahmen 14 begrenzt. Die Reinigungsvorrichtung 10 umfasst zwei Wagen 16, 16', die an Längsseiten des Rahmens 14 angeordnet sind. Die Wagen 16, 16' weisen jeweils mehrere Rollen 18 auf, mittels derer die Wagen 16, 16' verfahrbar an dem Rahmen 14 geführt sind.

Ein Reinigungskopf 20 der Vorrichtung 10 ist an einem Schlitten 22 angeordnet. Der Reinigungskopf 20 umfasst zwei Reinigungswalzen 24, die mit Hilfe eines Motors 26 über einen Riemen 28 zu Drehbewegungen angetrieben werden können, um die Fläche 12 zu reinigen. Die Walzen 24 sind von einer tragrahmenartigen Basis 25 des Schlittens 22 gehalten, die auch ein verschwenkbar zur Basis 25 gelagertes Führungselement 27 trägt. Der Aufbau und die Funktion des Führungselements 27 werden nachfolgend noch genauer erläutert.

Wie eingangs bereits erwähnt wurde, ist es für einen effizienten Betrieb von Solar- oder Photovoltaikanlagen wichtig, die entsprechenden Kollektorflächen regelmäßig zu reinigen. Um die Betriebskosten der Anlage gering zu halten, soll dies möglichst automatisch geschehen. D.h. die von einem Bedienungspersonal erforderlichen Eingriffe zur Reinigung der Fläche 12 sollen möglichst minimal sein.

Um die zu reinigenden Fläche 12 schrittweise und mit minimalem Personaleinsatz reinigen zu können, sind nicht nur die Wagen 16, 16' bewegbar, sondern auch der Schlitten 22 kann verfahren werden. Er ist entlang eines Seils 30 verfahrbar (Bewegungsrichtung R2), das mit beiden Wagen 16, 16' verbunden ist. Das Seil 30 wirkt mit einer Rolle 32 des Führungselements 27 zusammen. Es umschlingt die Rolle 32, so dass eine Drehung der Rolle 32 zu einem Verfahren des Schlittens 22 führt. Ein Antrieb der Rolle 32 ist in Fig. 1 nicht gezeigt. Er ist jedoch auch an dem Schlitten 22 angeordnet.

Die Rolle 32 ist drehfest mit einer koaxial angeordneten Rolle 34 gekoppelt, die wiederum über einen Riemen 36 mit Zahnrädern 38 in antriebswirksamer Verbindung steht. D.h. durch einen Antrieb der Rolle 32 zu einer Drehbewegung wird nicht nur eine Bewegung des Schlittens 22 entlang des die Bewegung des Schlittens 22 führenden Seils 30 bewirkt, sondern es wird auch eine Drehbewegung der Zahnräder 38 erzeugt.

Falls sich der Schlitten 22 - anders als in Fig. 1 gezeigt - in einem Bereich zwischen den Wagen 16, 16' befindet, hat die Drehung der Zahnräder 38 keine besondere Wirkung. Durch die Drehbewegung der Rolle 32 wird der Schlitten 22 in der gewünschten Geschwindigkeit über die Fläche 12 geführt, wobei die Reinigungswalzen 24 des Reinigungskopfs 20 ihre reinigende Arbeit verrichten. Es ist denkbar, die Rolle 34 in dieser Situation von der Rolle 32 zu entkoppeln.

Sobald der Schlitten 22 jedoch in Kontakt mit einem der Wagen 16, 16' kommt, bewirkt der Antrieb der Zahnräder 38 eine Bewegung des entsprechenden Wagens 16, 16'. Nachfolgend wird dies anhand der in Fig. 1 gezeigten Situation beschrieben, bei der der Schlitten 22 das obere Ende seiner "Pendelbewegung" zwischen den Wagen 16, 16' erreicht hat. Der Schlitten 22 hat sich dabei dem Wagen 16 so weit angenähert, dass das obere Zahnrad 38 in Eingriff mit einem Zahnrad 40 gelangt, das über Zahnräder 42 und als Zwischenräder fungierende Zahnräder 44 mit den Rollen 18 in antriebswirksamer Verbindung steht. Eine von dem Antrieb des Schlittens 22 erzeugte Antriebsdrehbewegung wird somit auf die Rollen 18 übertragen, wodurch der Wagen 16 auf dem Rahmen 14 verfahren wird. Es kann vorgesehen sein, dass die Rolle 32 in diesem Zustand aktiv oder passiv von dem Antrieb entkoppelt wird und lediglich die Rolle 34 angetrieben wird.

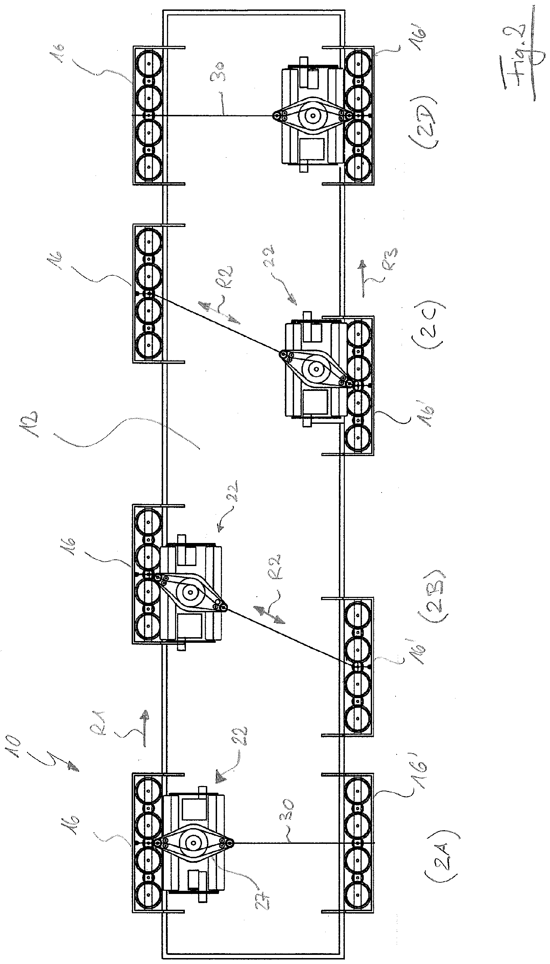

Fig. 2 zeigt den Ablauf eines schrittweisen Reinigens der Fläche 12. In Fig. 2A ist die in Fig. 1 dargestellte Situation gezeigt. Fig. 2B zeigt die sich einstellende Situation nach einem seitlichen Verfahren des Wagens 16 auf dem Rahmen 14, welches in der vorstehend beschriebenen Weise bewirkt wurde. Die Strecke, um die der Wagen 16 nach rechts verfahren wurde, kann beispielsweise dadurch festgelegt werden, dass die Drehrichtung des Antriebs des Schlittens 22 nach einer vorbestimmten Zeit umgekehrt wird und - falls sie zeitweise entkoppelt war - die Rolle 32 wieder antriebswirksam mit dem ihr zugeordneten Antrieb verbunden wird. Dann bewegt sich der Schlitten 22 von dem Wagen 16 weg, wodurch die Zahnräder 38 und 40 außer Eingriff gebracht werden. Der Wagen 16 stoppt dann, sei es durch die innere Reibung der Mechanik des Wagens 16 und/oder mit Hilfe von Halte- oder Bremsmitteln.

Der untere Wagen 16' hat sich währenddessen nicht weiterbewegt, so dass das Seil 30 nun schräg über die Fläche 12 gespannt ist. Eine damit einhergehende Verlängerung des Seils 30 kann durch eine entsprechende Ausgestaltung einer Verbindung 39 (siehe Fig. 1) des Seils 30 mit dem Wagen 16 und/oder dem Wagen 16' zugelassen werden. Das Führungselement 27 wurde durch das Seil 30 relativ zur Basis 25 verschwenkt, so dass die Ausrichtung der Basis 25 im Wesentlichen unverändert ist.

Wie in Fig. 2C zu sehen ist, bewegt sich der Schlitten 22 anschließend nach unten, bis er in Kontakt mit dem Wagen 16' kommt. Das untere Zahnrad 38 treibt dann den Wagen 16' (in analoger Weise wie das obere Zahnrad 38 den Wagen 16) zu einer Bewegung nach rechts an (Bewegung R3), bis der in Fig. 2D gezeigte Zustand erreicht ist und der Schlitten 22 sich erneut in Bewegung setzt und entlang des Seils 30 zu dem Wagen 16 verfahren wird.

Das vorstehend beschriebene Bewegungsschema kann natürlich auch in umgekehrter Richtung abgearbeitet werden.

Die Reinigungsvorrichtung 10 benötigt zur Bewegung des Schlittens 22 über die Fläche 12 lediglich einen Antrieb, nämlich den der Rolle 32. Dieser Antrieb kann beispielsweise ein elektrischer Antrieb sein. Um eine externe Stromzufuhr zu minimieren oder gar obsolet werden zu lassen, kann der Vorrichtung 10 eine eigene Photovoltaikanlage sowie ein geeigneter Energiespeicher zugeordnet sein. Insbesondere sind die beiden genannten Komponenten an dem Schlitten 22 und/oder den Wagen 16, 16' angeordnet.

Abweichend von der beschriebenen Ausgestaltung der Reinigungsvorrichtung 10 kann es vorgesehen sein, dass auch die Reinigungswalzen 24 von dem Antrieb der Rolle 32 angetrieben werden. Vorteilhaft ist es beispielsweise, wenn der Antrieb ein hydraulischer Antrieb ist. Das dabei eingesetzte Wasser kann nach seiner Nutzung als Antriebsmittel über geeignete Düsen auf die Fläche 12 aufgebracht werden, um die Reinigungswirkung der Vorrichtung 10 zu verbessern.

Anstelle des Seils 30 kann auch eine (ggf. teleskopierbare) Stange vorgesehen sein, entlang derer sich der Schlitten 22 bewegt, beispielsweise mit Hilfe eines die Stange von zwei Seiten umklammernden Rollenpaars.

In bestimmten Anwendungsfällen kann es vorteilhaft sein, den Wagen 16, 16' eigene Antriebe zuzuordnen, die aktiviert werden, sobald sich der Schlitten 22 in einer vorbestimmten Position befindet. Die Aktivierung kann durch Annäherungs- und/oder Kontaktschalter oder geeignete Sensoren erfolgen. Beispielsweise ist es denkbar, dass ein solcher Kontaktschalter einen elektrischen Kontakt zwischen einer Energiezufuhr des Antriebs des Schlittens 22 und dem jeweiligen Antrieb der Wagen 16, 16' herstellt. In diesem Fall benötigen die Wagen 16, 16' keine eigene Stromzufuhr.

Bei einer nicht gezeigten Ausführungsform der erfindungsgemäßen Reinigungsvorrichtung kann auch lediglich ein Wagen 16 oder 16' vorgesehen sein, der z.B. mit einem starren Führungsmittel (z.B. Stange) verbunden ist. Der Schlitten 22 mit dem Reinigungskopf 20 fährt dann entlang dieses Führungsmittels hin und her, wobei er bei dem Erreichen des Wagens 16 bzw. 16' dessen Bewegung bewirkt, wie es vorstehend in verschiedenen Varianten beschrieben wurde. Beim Erreichen des anderen Endes des Führungsmittels kann eine Umkehr der Bewegung des Schlittens 22 durch dort vorgesehene, geeignete Annäherungs- und/oder Kontaktschalter oder Sensoren bewirkt werden. Dieses Ende des Führungsmittels wird bei dieser Ausführungsform vorteilhafterweise durch eine eigene Führungseinrichtung im Bereich des Rahmens 14 (oder durch den Rahmen 14 selbst) geführt und/oder abgestützt. Das Führungsmittel kann sich auch, beispielsweise mittels einer Rolle, auf der Fläche 12 abstützen.

Wie vorstehend bereits kurz erwähnt, können Mittel - z.B. Halte- oder Bremsmittel - vorgesehen sein, die sicherstellen, dass die Wagen 16, 16' jeweils in ihrer Position verbleiben, wenn sie sich gerade nicht entlang des Rahmens 14 bewegen sollen, insbesondere also dann, wenn der Schlitten 22 sich zwischen den Wagen 16, 16' bewegt, um seine Reinigungsarbeit zu verrichten, und eine Bewegung der Wagen 16, 16' von Nachteil wäre.

Derartige Sicherungsmittel können z.B. von einer entsprechend weich bzw. komprimierbar ausgestalteten Gummierung 18a der Rollen 18 gebildet werden, so dass die Rollen 18, um in Bewegung gesetzt zu werden, eine bestimmte Kraft bzw. ein bestimmtes Moment benötigen, die bzw. das nur dann aufgebracht wird, wenn zu diesem Zweck der Schlitten 22 mit dem jeweiligen Wagen 16 bzw. 16' zusammenwirkt. Alternativ oder zusätzlich kann eine gezielte Schwergängigkeit und/oder eine Rastung der Rollen 18 vorgesehen werden, um eine zu überwindende Schwelle zu schaffen.

Eine weitere Möglichkeit zeigt das Detail A in Fig. 1: Ausleger 46 des jeweiligen Wagens 16, 16' und Scheiben 48 der Rollen 18 bilden gemeinsam eine den Rahmen 14 umgreifende Halteeinrichtung. Der Wagen ist auf dem Rahmen 14 in einem gewissen Maße verkippbar, wie es durch den Doppelpfeil angedeutet ist. In Abhängigkeit davon, ob das Seil 30 bezüglich des Wagens 16, 16' auf Zug belastet wird oder nicht, gelangt ein als Bremsschuh 49 ausgebildeter Abschnitt des Auslegers 48 in oder außer reibenden bzw. haftenden Eingriff mit der zu reinigenden Fläche 12. Die Bewegung des Schlittens 22 selbst stellt dann also automatisch sicher, dass der Wagen 16, 16' entweder gebremst oder bewegbar ist.

Die Ausleger 48 können alternativ oder zusätzlich auch als Träger für nicht dargestellte - mechanische, elektrische oder optische - Sensoren zur Endlagenerkennung dienen, mittels welcher die Vorrichtung das Erreichen eines Endes der zu reinigenden Fläche 12 - in der jeweiligen Bewegungsrichtung der Wagen 16, 16' gesehen - erkennen kann. Derartige Sensoren können alternativ oder zusätzlich auch an anderen Stellen angeordnet werden, z.B. an seitlichen Vorsprüngen 50 des Schlittens 22.

Die Vorrichtung kann derart ausgebildet sein, dass eine Richtungsumkehr des Schlittens 22 automatisch erfolgt.

Alternativ kann eine Schalteinrichtung für den Benutzer vorgesehen sein. Diese kann als Impulssteuerung und insbesondere derart ausgebildet sein, dass durch Ein- und Ausschalten der Zufuhr von z.B. Wasser, das dem Schlitten 22 unter Druck beispielsweise über einen Hochdruckreiniger, an den die Vorrichtung angeschlossen ist, zugeführt wird, am Schlitten ein Schaltvorgang ausgelöst wird. Ein Schaltvorgang kann auch elektrisch z.B. mittels eines oder mehrerer Servomotoren, die z.B. über eine elektrische Leitung oder drahtlos angesteuert werden, oder mechanisch über ein z.B. parallel zu einem Wasserschlauch zwischen dem Benutzer und dem Schlitten 22 geführtes, manuell zu betätigendes Zugseil ausgelöst werden.

Mittels derartiger Schaltvorgänge kann z.B. ein Ventilblock am Schlitten 22 in einen jeweils gewünschten Arbeitszustand geschaltet werden, so dass beispielsweise mit unter Druck stehendem Wasser über den Ventilblock wahlweise entweder ein eine erste Bewegungsrichtung des Schlittens 22 bewirkendes erstes Schaufelrad oder ein eine entgegengesetzte zweite Bewegungsrichtung des Schlittens 22 bewirkendes zweites Schaufelrad antriebswirksam beaufschlagt wird. Diese Schaufelräder können z.B. von der Rolle 22 (Fig. 1) gebildet und entlang der Drehachse der Rolle 22 mit Abstand voneinander angeordnet sein.

### Bezugszeichenliste

- 10: Reinigiungsvorrichtung
- 12: Fläche
- 14: Rahmen
- 16, 16': Wagen
- 18: Rolle
- 18a: Gummierung
- 20: Reinigungskopf
- 22: Schlitten
- 24: Reinigungswalze
- 25: Basis
- 26: Motor
- 27: Führungselement
- 28, 36: Riemen
- 30: Seil
- 32, 34: Rolle
- 38, 40, 42, 44: Zahnrad
- 46: Ausleger
- 48: Scheibe
- 49: Bremsschuh
- 50: Vorsprung

- A: Detail
- R1, R2, R3: Bewegungsrichtung

## Patentansprüche

1. Vorrichtung zum Reinigen einer Fläche (12), insbesondere an Solar- oder Photovoltaikanlagen, mit wenigstens einem Reinigungskopf (20), der zumindest ein Reinigungsorgan (24) aufweist, insbesondere eine in Rotation versetzbare Bürste, und mit einer Bewegungseinrichtung zur Bewegung des Reinigungskopfs (20) über zumindest einen Teil der zu reinigenden Fläche (12),
wobei die Bewegungseinrichtung eine erste, in eine erste Bewegungsrichtung (R1) bewegbare Bewegungseinheit (16) und eine zweite Bewegungseinheit (22) aufweist, wobei der Reinigungskopf (20) mittels der zweiten Bewegungseinheit (22) entlang eines Führungsmittels (30), das mit der ersten Bewegungseinheit (16) verbunden ist, quer oder schräg zu der ersten Bewegungsrichtung (R1) bewegbar ist, und wobei ein an der ersten und/oder der zweiten Bewegungseinheit (16 bzw. 22) angeordnetes Steuerungsmittel vorgesehen ist, mit dem die erste Bewegungseinheit (16) in Abhängigkeit einer Position der zweiten Bewegungseinheit (22) automatisch bewegbar ist,
**dadurch gekennzeichnet, dass**
das Steuerungsmittel einen Annäherungsschalter oder einen entsprechenden Sensor aufweist, der dazu ausgebildet ist, bei einer Annäherung der Bewegungseinheiten (16, 22) einen Antrieb der ersten Bewegungseinheit (16) zu bewirken, oder dass das Steuerungsmittel einen Kontaktschalter oder einen entsprechenden Sensor aufweist, der dazu ausgebildet ist, bei einem Kontakt der Bewegungseinheiten (16, 22) einen Antrieb der ersten Bewegungseinheit (16) zu bewirken.

2. Vorrichtung zum Reinigen einer Fläche (12), insbesondere an Solar- oder Photovoltaikanlagen, mit wenigstens einem Reinigungskopf (20), der zumindest ein Reinigungsorgan (24) aufweist, insbesondere eine in Rotation versetzbare Bürste, und mit einer Bewegungseinrichtung zur Bewegung des Reinigungskopfs (20) über zumindest einen Teil der zu reinigenden Fläche (12),
wobei die Bewegungseinrichtung eine erste, in eine erste Bewegungsrichtung (R1) bewegbare Bewegungseinheit (16) und eine zweite Bewegungseinheit (22) aufweist, wobei der Reinigungskopf (20) mittels der zweiten Bewegungseinheit (22) entlang eines Führungsmittels (30), das mit der ersten Bewegungseinheit (16) verbunden ist, quer oder schräg zu der ersten Bewegungsrichtung (R1) bewegbar ist, und wobei ein an der ersten und/oder der zweiten Bewegungseinheit (16 bzw. 22) angeordnetes Steuerungsmittel vorgesehen ist, mit dem die erste Bewegungseinheit (16) in Abhängigkeit einer Position der zweiten Bewegungseinheit (22) automatisch bewegbar ist,
**dadurch gekennzeichnet, dass**
das Steuerungsmittel eine an der zweiten Bewegungseinheit (22) vorgesehene mechanische Antriebseinrichtung umfasst, mit der die erste Bewegungseinheit (16) bei einem Kontakt der Bewegungseinheiten (16, 22) zu der Bewegung in der ersten Bewegungsrichtung (R1) antreibbar ist.

3. Vorrichtung nach Anspruch 2,
**dadurch gekennzeichnet, dass**
die Antriebseinrichtung antriebswirksam mit einem Antrieb der zweiten Bewegungseinheit gekoppelt ist,
wobei insbesondere die Antriebseinrichtung ein Zahnrad (38) umfasst, das bei einem Kontakt der Bewegungseinheiten (16, 16', 22) in Eingriff mit einem Antriebselement, insbesondere Zahnrad (40), eines Antriebs der ersten Bewegungseinheit (16, 16') ist.

4. Vorrichtung nach zumindest einem der vorstehenden Ansprüche,
**dadurch gekennzeichnet, dass**
das Steuerungsmittel ein Steuermittel umfasst, mit dem ein Antrieb der ersten Bewegungseinheit (16, 16') zeitverzögert und/oder nach dem Zurücklegen einer vorbestimmten Strecke unterbrechbar ist.

5. Vorrichtung nach zumindest einem der vorstehenden Ansprüche,
**dadurch gekennzeichnet, dass**
das Steuerungsmittel derart ausgestaltet ist, dass eine Umkehr eines Antriebs der zweiten Bewegungseinheit (22) zeitverzögert und/oder nach dem Zurücklegen einer vorbestimmten Strecke bewirkbar ist.

6. Vorrichtung nach zumindest einem der vorstehenden Ansprüche,
**dadurch gekennzeichnet, dass**
der Reinigungskopf (20) an der zweiten Bewegungseinheit (22) angeordnet ist,
wobei insbesondere ein mit dem Führungsmittel (30) zusammenwirkendes Element (27) der zweiten Bewegungseinheit (22) relativ zu einer den Reinigungskopf (20) tragenden Basis (25) der zweiten Bewegungseinheit (22) verschwenkbar ist.

7. Vorrichtung nach zumindest einem der vorstehenden Ansprüche,
**dadurch gekennzeichnet, dass**
die erste und/oder die zweite Bewegungseinheit (16, 16' bzw. 22) elektrisch, hydraulisch und/oder pneumatisch angetrieben ist.

8. Vorrichtung nach zumindest einem der vorstehenden Ansprüche,
**dadurch gekennzeichnet, dass**
das Reinigungsorgan (24) mittels eines elektrischen, hydraulischen oder/oder pneumatischen Antriebs (26) bewegbar ist.

9. Vorrichtung nach zumindest einem der vorstehenden Ansprüche,
**dadurch gekennzeichnet, dass**
die Vorrichtung einen Energiespeicher und/oder eine Photovoltaikeinheit umfasst, die mit einem Antrieb der ersten und/oder der zweiter Bewegungseinheit (16, 16' bzw. 22) und/oder mit einem Antrieb des Reinigungsorgans (24) gekoppelt sind.

10. Vorrichtung nach zumindest einem der vorstehenden Ansprüche,
**dadurch gekennzeichnet, dass**
das Führungsmittel (30) relativ zu der ersten Bewegungseinheit (16, 16') verschwenkbar ist,
und/oder dass das Führungsmittel (30) längenveränderlich ist.

11. Vorrichtung nach zumindest einem der vorstehenden Ansprüche,
**dadurch gekennzeichnet, dass**
das Führungsmittel ein Seil (30) oder ein Band ist.

12. Vorrichtung nach zumindest einem der vorstehenden Ansprüche,
**dadurch gekennzeichnet, dass**
eine dritte Bewegungseinheit (16') vorgesehen ist, die in einer dritten Richtung (R3), die insbesondere parallel zu der ersten Richtung (R1) verläuft, bewegbar ist und die mit dem Führungsmittel (30) verbunden ist, wobei ein weiteres, an der dritten und/oder der zweiten Bewegungseinheit (16' bzw. 22) angeordnetes Steuerungsmittel vorgesehen ist, mit dem die dritte Bewegungseinheit (16') in Abhängigkeit einer Position der zweiten Bewegungseinheit (22) automatisch bewegbar ist.

13. Vorrichtung nach zumindest einem der vorstehenden Ansprüche,
**dadurch gekennzeichnet, dass**
die erste und/oder -falls vorhanden - die dritte Bewegungseinheit (16, 16') mit einer Halteeinrichtung (46, 48) versehen ist, die dazu ausgebildet ist, im an der Solar- oder Photovoltaikanlage angeordneten Zustand einen Bestandteil, insbesondere einen Rahmen (14), der Solar- oder Photovoltaikanlage zu umgreifen und eine begrenzte Verkippbarkeit der Bewegungseinheit (16, 16') zuzulassen.

14. System mit einer Solar- oder Photovoltaikanlage und mit einer Vorrichtung nach zumindest einem der vorstehenden Ansprüche.

15. System nach Anspruch 14,
**dadurch gekennzeichnet, dass**
die erste und/oder -falls vorhanden - die dritte Bewegungseinheit (16, 16') entlang eines, insbesondere äußeren, Rahmens (14) der zu reinigenden Fläche (12) geführt ist, insbesondere auf dem Rahmen (14), wobei insbesondere der Rahmen (14) eine äußere Umrahmung, eine äußere Begrenzung und/oder eine äußere Einfassung der jeweils zu reinigenden Fläche (12) ist und/oder der Rahmen (14) ein Bestandteil der Solar- oder Photovoltaikanlage ist.

## Claims

1. An apparatus for cleaning a surface (12), in particular at solar collectors or photovoltaic installations, having at least one cleaning head (20) which has at least one cleaning member (24), in particular a brush which can be set into rotation, and having a movement device for moving the cleaning head (20) over at least a part of the surface (12) to be cleaned,
wherein the movement device has a first movement unit (16) movable in a first movement direction (R1) and a second movement unit (22), wherein the cleaning head (20) is movable transversely or obliquely to the first movement direction (R1) by means of the second movement unit (22) along a guide means (30) which is connected to the first movement unit (16), and wherein a control means is provided which is arranged at the first and/or second movement unit (16 or 22) and by which the first movement unit (16) is automatically movable in dependence on a position of the second movement unit (22),
**characterized in that**
the control means has a proximity switch or a corresponding sensor which is configured to effect a drive of the first movement unit (16) on an approach of the movement units (16, 22), or **in that** the control means has a contact switch or a corresponding sensor which is configured to effect a drive of the first movement unit (16) on a contact of the movement units (16, 22).

2. An apparatus for cleaning a surface (12), in particular at solar collectors or photovoltaic installations, having at least one cleaning head (20) which has at least one cleaning member (24), in particular a brush which can be set into rotation, and having a movement device for moving the cleaning head (20) over at least a part of the surface (12) to be cleaned,
wherein the movement device has a first movement unit (16) movable in a first movement direction (R1) and a second movement unit (22), wherein the cleaning head (20) is movable transversely or obliquely to the first movement direction (R1) by means of the second movement unit (22) along a guide means (30) which is connected to the first movement unit (16), and wherein a control means is provided which is arranged at the first and/or second movement unit (16 or 22) and by which the first movement unit (16) is automatically movable in dependence on a position of the second movement unit (22),
**characterized in that**
the control means comprises a mechanical drive device which is provided at the second movement unit (22) and with which the first movement unit (16) is drivable to make the movement in the first movement direction (R1) on a contact of the movement units (16, 22).

3. An apparatus in accordance with claim 2,
**characterized in that**
the drive device is drive-effectively coupled to a drive of the second movement unit,
wherein the drive device in particular comprises a gear (38) which is in engagement with a drive element, in particular a gear (40), of a drive of the first movement unit (16, 16') on a contact of the movement units (16, 16', 22).

4. An apparatus in accordance with at least one of the preceding claims,
**characterized in that**
the control means comprises a controlling means with which a drive of the first movement unit (16, 16') can be interrupted with a time delay and/or after the traveling of a predefined distance.

5. An apparatus in accordance with at least one of the preceding claims,
**characterized in that**
the control means is configured such that a reversal of a drive of the second movement unit (22) can be effected with a time delay and/or after the traveling of a predefined distance.

6. An apparatus in accordance with at least one of the preceding claims,
**characterized in that**
the cleaning head (20) is arranged at the second movement unit (22), wherein an element (27) of the second movement unit (22) cooperating with the guide means (30) is in particular pivotable relative to a base (25) of the second movement unit (22) carrying the cleaning head (20).

7. An apparatus in accordance with at least one of the preceding claims,
**characterized in that**
the first and/or second movement unit (16, 16' or 22) is/are electrically, hydraulically and/or pneumatically driven.

8. An apparatus in accordance with at least one of the preceding claims,
**characterized in that**
the cleaning member (24) is movable by means of an electric, hydraulic and/or pneumatic drive (26).

9. An apparatus in accordance with at least one of the preceding claims,
**characterized in that**
the apparatus comprises an energy store and/or a photovoltaic unit which is/are coupled to a drive of the first and/or second movement unit (16, 16' or 22) and/or to a drive of the cleaning member (24).

10. An apparatus in accordance with at least one of the preceding claims,
**characterized in that**
the guide means (30) is pivotable relative to the first movement unit (16, 16'),
and/or **in that** the guide means (30) is variable in length.

11. An apparatus in accordance with at least one of the preceding claims,
**characterized in that**
the guide means is a cable (30) or a ribbon.

12. An apparatus in accordance with at least one of the preceding claims,
**characterized in that**
a third movement unit (16') is provided which is movable in a third direction (R3), which in particular extends in parallel with the first direction (R1), and which is connected to the guide means (30), with a further control means being provided which is arranged at the third and/or at the second movement unit (16' or 22) and with which the third movement unit (16') is automatically movable in dependence on a position of the second movement unit (22).

13. An apparatus in accordance with at least one of the preceding claims,
**characterized in that**
the first and/or - if present - the third movement unit (16, 16') is/are provided with a holding device (46, 48) which is configured to engage around a component, in particular a frame (14), of the solar collector or photovoltaic installation in a state arranged at the solar collector or photovoltaic installation and to permit a limited tiltability of the movement unit (16, 16').

14. A system having a solar collector or a photovoltaic installation and having an apparatus in accordance with at least one of the preceding claims.

15. A system in accordance with claim 14,
**characterized in that**
the first and/or - if present - the third movement unit (16, 16') is/are guided along a frame (14), in particular an outer frame (14), of the surface (12) to be cleaned, in particular on the frame (14), with in particular the frame (14) being an outer framing, an outer boundary and/or an outer enclosure of the respective surface (12) to be cleaned, and/or the frame (14) being a component of the solar collector or photovoltaic installation.

## Revendications

1. Dispositif de nettoyage d'une surface (12), en particulier sur des installations solaires ou photovoltaïques, comprenant au moins une tête de nettoyage (20) qui présente au moins un organe de nettoyage (24), en particulier une brosse pouvant être mise en rotation, et comprenant un organe de déplacement pour déplacer la tête de nettoyage (20) sur une partie au moins de la surface (12) à nettoyer,
dans lequel
l'organe de déplacement comprend une première unité de déplacement (16) mobile dans une première direction de déplacement (R1) et une deuxième unité de déplacement (22),
à l'aide de la deuxième unité de déplacement (22), la tête de nettoyage (20) peut être déplacée transversalement ou en oblique par rapport à la première direction de déplacement (R1) le long d'un moyen de guidage (30) relié à la première unité de déplacement (16), et
il est prévu un moyen de commande disposé sur la première et/ou la deuxième unité de déplacement (16 ou 22), avec lequel la première unité de déplacement (16) peut être déplacée automatiquement en fonction d'une position de la deuxième unité de déplacement (22),
**caractérisé en ce que**
le moyen de commande comporte un interrupteur de proximité ou un capteur correspondant qui est réalisé pour provoquer, lors d'un rapprochement des unités de déplacement (16, 22), un entraînement de la première unité de déplacement (16), ou
**en ce que** le moyen de commande comporte un interrupteur de contact ou un capteur correspondant qui est réalisé pour provoquer, lors d'un contact des unités de déplacement (16, 22), un entraînement de la première unité de déplacement (16).

2. Dispositif de nettoyage d'une surface (12), en particulier sur des installations solaires ou photovoltaïques, comprenant au moins une tête de nettoyage (20) qui présente au moins un organe de nettoyage (24), en particulier une brosse pouvant être mise en rotation, et comprenant un organe de déplacement pour déplacer la tête de nettoyage (20) sur une partie au moins de la surface (12) à nettoyer,
dans lequel
l'organe de déplacement comprend une première unité de déplacement (16) mobile dans une première direction de déplacement (R1) et une deuxième unité de déplacement (22),
à l'aide de la deuxième unité de déplacement (22), la tête de nettoyage (20) peut être déplacée transversalement ou en oblique par rapport à la première direction de déplacement (R1) le long d'un moyen de guidage (30) relié à la première unité de déplacement (16), et
il est prévu un moyen de commande disposé sur la première et/ou la deuxième unité de déplacement (16 ou 22), avec lequel la première unité de déplacement (16) peut être déplacée automatiquement en fonction d'une position de la deuxième unité de déplacement (22),
**caractérisé en ce que**
le moyen de commande comporte un organe d'entraînement mécanique prévu sur la deuxième unité de déplacement (22), avec lequel la première unité de déplacement (16) peut être entraînée à se déplacer dans la première direction de déplacement (R1), lors d'un contact des unités de déplacement (16, 22).

3. Dispositif selon la revendication 2,
**caractérisé en ce que**
l'organe d'entraînement est couplé en entraînement à un entraînement de la deuxième unité de déplacement,
en particulier, l'organe d'entraînement comprend une roue dentée (38) qui, lors d'un contact des unités de déplacement (16, 16', 22), est en prise avec un élément d'entraînement, en particulier une roue dentée (40), d'un entraînement de la première unité de déplacement (16, 16').

4. Dispositif selon l'une au moins des revendications précédentes,
**caractérisé en ce que**
le moyen de commande comprend un moyen de contrôle permettant d'interrompre un entraînement de la première unité de déplacement (16, 16') de manière temporisée et/ou après qu'un trajet prédéterminé a été parcouru.

5. Dispositif selon l'une au moins des revendications précédentes,
**caractérisé en ce que**
le moyen de commande est conçu de telle sorte qu'une inversion d'un entraînement de la deuxième unité de déplacement (22) peut être provoquée de manière temporisée et/ou après qu'un trajet prédéterminé a été parcouru.

6. Dispositif selon l'une au moins des revendications précédentes,
**caractérisé en ce que**
la tête de nettoyage (20) est disposée sur la deuxième unité de déplacement (22),
en particulier, un élément (27) de la deuxième unité de déplacement (22) coopérant avec le moyen de guidage (30) peut pivoter par rapport à une base (25) de la deuxième unité de déplacement (22) portant la tête de nettoyage (20).

7. Dispositif selon l'une au moins des revendications précédentes,
**caractérisé en ce que**
la première et/ou la deuxième unité de déplacement (16, 16' ou 22) est entraînée par voie électrique, hydraulique et/ou pneumatique.

8. Dispositif selon l'une au moins des revendications précédentes,
**caractérisé en ce que**
l'organe de nettoyage (24) peut être déplacé à l'aide d'un entraînement électrique, hydraulique et/ou pneumatique (26).

9. Dispositif selon l'une au moins des revendications précédentes,
**caractérisé en ce que**
le dispositif comprend un accumulateur d'énergie et/ou une unité photovoltaïque qui sont couplés à un entraînement de la première et/ou de la deuxième unité de déplacement (16, 16' ou 22) et/ou à un entraînement de l'organe de nettoyage (24).

10. Dispositif selon l'une au moins des revendications précédentes,
**caractérisé en ce que**
le moyen de guidage (30) peut pivoter par rapport à la première unité de déplacement (16, 16'),
et/ou **en ce que** le moyen de guidage (30) est de longueur variable.

11. Dispositif selon l'une au moins des revendications précédentes,
**caractérisé en ce que**
le moyen de guidage est un câble (30) ou une bande.

12. Dispositif selon l'une au moins des revendications précédentes,
**caractérisé en ce que**
il est prévu une troisième unité de déplacement (16') qui est mobile dans une troisième direction (R3) s'étendant en particulier parallèlement à la première direction (R1), et qui est reliée au moyen de guidage (30), et
il est prévu un autre moyen de commande disposé sur la troisième et/ou la deuxième unité de déplacement (16' ou 22), avec lequel la troisième unité de déplacement (16') peut être déplacée automatiquement en fonction d'une position de la deuxième unité de déplacement (22).

13. Dispositif selon l'une au moins des revendications précédentes,
**caractérisé en ce que**
la première et/ou la troisième unité de déplacement (16, 16') - si présente - est pourvue d'un organe de retenue (46, 48) qui est réalisé pour entourer, à l'état disposé sur l'installation solaire ou photovoltaïque, un élément constitutif, en particulier un cadre (14), de l'installation solaire ou photovoltaïque, et pour permettre une capacité de basculement limitée de l'unité de déplacement (16, 16').

14. Système comprenant une installation solaire ou photovoltaïque et un dispositif selon l'une au moins des revendications précédentes.

15. Système selon la revendication 14,
**caractérisé en ce que**
la première et/ou la troisième unité de déplacement (16, 16') - si présente - est guidée le long d'un cadre (14), en particulier extérieur, de la surface (12) à nettoyer, en particulier sur le cadre (14), le cadre (14) étant en particulier un encadrement extérieur, une délimitation extérieure et/ou une bordure extérieure de la surface (12) respective à nettoyer, et/ou le cadre (14) étant un élément constitutif de l'installation solaire ou photovoltaïque.
